# EUROPEAN PATENT APPLICATION

(11) **EP 4 455 857 A1**
(43) Date of publication of application: **30.10.2024**
(21) Application number: 23212893.4
(22) Date of filing: 29.11.2023
(51) Int. Cl.: G06F 3/12, B41J 3/407, G06K 19/06

(54) **INFORMATION PROCESSING SYSTEM, PROGRAM, AND INFORMATION PROCESSING METHOD**

(30) Priority: 24.04.2023 JP 2023071129
(71) Applicant: Fujifilm Business Innovation Corp., Tokyo 107-0052 (JP)
(72) Inventor: NOGUCHI, Daisuke, Yokohama, 220-0012 (JP); YAMAGUCHI, Megumi, Yokohama, 220-0012 (JP); NAKAYAMA, Hiroyoshi, Yokohama, 220-0012 (JP); KAWABE, Masatake, Yokohama, 220-0012 (JP)
(74) Representative: Meissner Bolte Partnerschaft mbB

(57) **Abstract**

An information processing system includes at least one processor configured to: acquire check data generated by scanning a printed product of an image including URL link information; attach the check data to 3D data of an attachment target of the printed product; and check validity of the URL link information by viewing the check data attached to the 3D data from a predetermined viewpoint in a virtual space.

## Description

### Background

### (i) Technical Field

The present disclosure relates to an information processing system, a program, and an information processing method.

### (ii) Related Art

Japanese Unexamined Patent Application Publication No. 2010-123007 describes an image processing apparatus that obtains a printed product to be attached to the surface of a three-dimensional object. In this image processing apparatus, input image data is converted into image data for a three-dimensional curved surface by image processing to correct distortion of an image printed on or attached to the three-dimensional surface.

Japanese Unexamined Patent Application Publication No. 2007-122616 describes a printing system that may print a printed product with a content including a link address to facilitate access to the link address. In this printing system, the link address is detected in the content to be printed and a code symbol is generated in such a format that the link address may be recognized when the code symbol is read by a code symbol reader.

Japanese Unexamined Patent Application Publication No. 2014-192664 describes a code identifying method that realizes a printed mobile code for which a link URL may be set after printing.

### Summary

Accordingly, it is an object of the present disclosure to check the validity of a URL link in an image with its printed product unattached to an attachment target.

According to a first aspect of the present disclosure, there is provided an information processing system comprising at least one processor configured to: acquire check data generated by scanning a printed product of an image including URL link information; attach the check data to 3D data of an attachment target of the printed product; and check validity of the URL link information by viewing the check data attached to the 3D data from a predetermined viewpoint in a virtual space.

According to a second aspect of the present disclosure, in the information processing system according to the first aspect, the processor is configured to: acquire an instruction to start printing of the image by an image forming apparatus; and if the 3D data is present, attach the check data generated by scanning the printed product of the image to the 3D data.

According to a third aspect of the present disclosure, in the information processing system according to the first or second aspect, the processor is configured to: if the 3D data is not present, generate 2D check data by scanning the printed product of the image; and check the validity of the URL link information in the 2D check data.

According to a fourth aspect of the present disclosure, in the information processing system according to any one of the first to third aspects, the processor is configured to further check the validity of the URL link information by viewing the check data from a viewpoint different from the predetermined viewpoint.

According to a fifth aspect of the present disclosure, in the information processing system according to any one of the first to fourth aspects, the processor is configured to output a result of checking on the validity of the URL link information to a display screen of an image forming apparatus.

According to a sixth aspect of the present disclosure, in the information processing system according to any one of the first to fifth aspects, the processor is configured to: generate correct data by rasterizing the image; and compare the correct data and the check data.

According to a seventh aspect of the present disclosure, in the information processing system according to the sixth aspect, the processor is configured to output a result of comparison between the correct data and the check data and a result of checking on the validity of the URL link information to a display screen of an image forming apparatus.

According to an eighth aspect of the present disclosure, there is provided a program causing a computer to execute a process for processing information. The process comprises: generating check data by scanning a printed product of an image including URL link information; attaching the check data to 3D data of an attachment target of the printed product; and checking validity of the URL link information by viewing the check data attached to the 3D data from a predetermined viewpoint in a virtual space.

According to a ninth aspect of the present disclosure, there is provided an information processing method comprising: generating check data by scanning a printed product of an image including URL link information; attaching the check data to 3D data of an attachment target of the printed product; and checking validity of the URL link information by viewing the check data attached to the 3D data from a predetermined viewpoint in a virtual space.

According to the first aspect, the eighth aspect and the ninth aspect of the present disclosure, the validity of the URL link information in the image may be checked with the printed product of the image unattached to the attachment target.

According to the second aspect of the present disclosure, the validity of the URL link information on the printed product of the image printed in response to the printing instruction may be checked.

According to the third aspect of the present disclosure, the validity of the URL link information in the image on the printed product before it is attached to the attachment target may be checked.

According to the fourth aspect of the present disclosure, the validity of the URL link information may be checked by viewing the check data from the plurality of viewpoints.

According to the fifth aspect of the present disclosure, the validity of the URL link information may be viewed on the display screen of the image forming apparatus.

According to the sixth aspect of the present disclosure, a difference from the correct data obtained by rasterizing the image may be extracted in addition to the checking on the validity of the URL link information in the check data obtained by scanning the printed product of the image.

According to the seventh aspect of the present disclosure, whether there is a difference between the check data and the correct data and the validity of the URL link may be viewed on the display screen of the image forming apparatus.

### Brief Description of the Drawings

An exemplary embodiment of the present disclosure will be described in detail based on the following figures, wherein:
Fig. 1 is a block diagram illustrating an example of the electrical configuration of an image forming apparatus in an information processing system according to an exemplary embodiment;
Fig. 2 is a block diagram illustrating an example of the functional configuration of the image forming apparatus in the information processing system according to the exemplary embodiment;
Fig. 3 is a schematic diagram illustrating an image subjected to checking on the validity of URL link information, a printed product of the image, an attachment target to which the printed product is attached, a viewpoint where the image on the printed product attached to the attachment target is viewed, and a projected image from the viewpoint in the information processing system according to the exemplary embodiment;
Fig. 4 illustrates an example of an option selection screen for a URL check process that is displayed on a display of the image forming apparatus according to the exemplary embodiment;
Fig. 5 illustrates an example of a result of comparison between correct data and check data and a result of checking on the validity of the URL link information on the display of the image forming apparatus according to the exemplary embodiment;
Fig. 6 is a flowchart illustrating an example of the URL check process according to the exemplary embodiment;
Fig. 7 is a flowchart illustrating another example of the URL check process according to the exemplary embodiment; and
Fig. 8 is a flowchart illustrating an example of a comparison process and a URL check process according to the exemplary embodiment.

### Detailed Description

An information processing system and an information processing program according to an exemplary embodiment of the present disclosure are described below with reference to the drawings. Constituent elements represented by the same reference symbols in the drawings are identical constituent elements. Unless otherwise noted, each constituent element is not limited to a single constituent element, and a plurality of constituent elements may be provided.

Description may be omitted for redundant configurations and reference symbols in the drawings. The exemplary embodiment of the present disclosure is not limitative and any appropriate changes such as omission of components, replacement with different components, or combination of the exemplary embodiment and various modifications may be made within the scope disclosed herein.

### <Information Processing System>

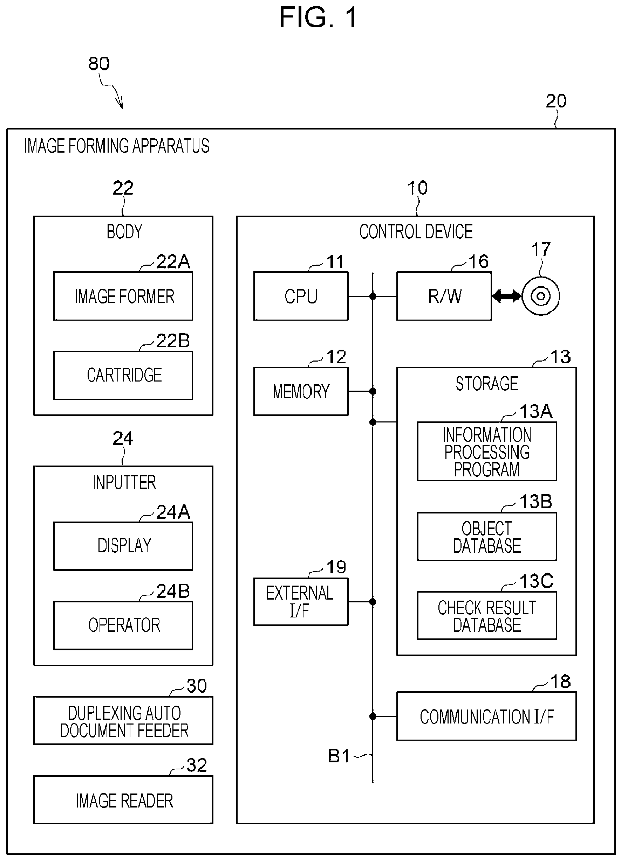

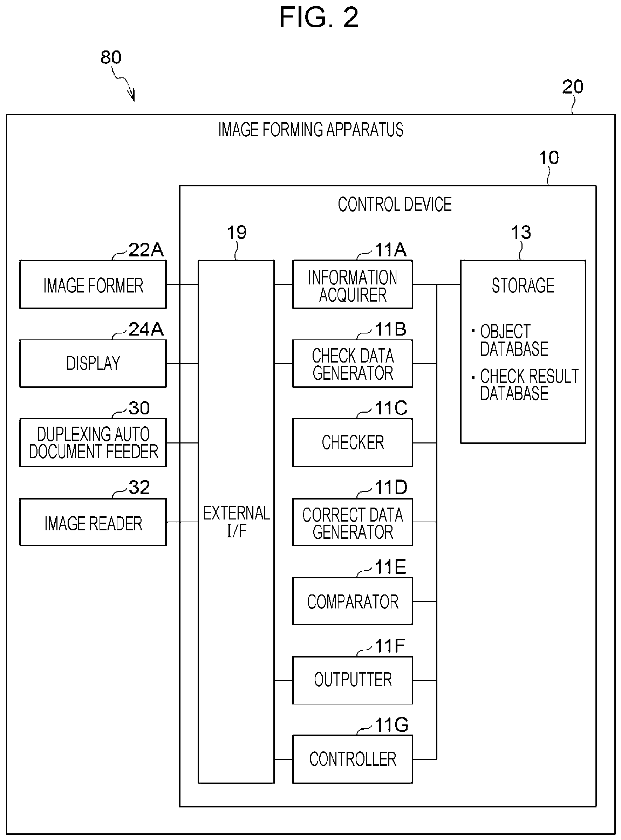

An information processing system 80 illustrated in Figs. 1 and 2 is constructed in an image forming apparatus 20. The "system" in the exemplary embodiment of the present disclosure includes a system constituted by a plurality of apparatuses, a system constituted by a single apparatus, and a system constructed in a higher-level apparatus or system.

That is, the information processing system 80 of the exemplary embodiment of the present disclosure is not limited to the system constructed in the image forming apparatus 20, and may be constructed over a plurality of apparatuses other than the image forming apparatus 20. For example, the information processing system 80 may be constructed over the image forming apparatus 20, a paper feeder external to the image forming apparatus 20, and a terminal such as a personal computer.

The information processing system 80 of the exemplary embodiment of the present disclosure is not limited to the system constructed in the image forming apparatus 20, and may be, for example, an external server (cloud) that assigns a job received from a client to one printer selected from among a plurality of printers.

### <Overview of Image Forming Apparatus>

The image forming apparatus 20 according to this exemplary embodiment receives a job set by a user's input operation, and performs the designated job. Examples of the job to be performed by the image forming apparatus 20 include a print job in which a document image generated from a read document is formed on a recording medium such as paper.

The image forming apparatus 20 includes a body 22, an inputter 24, a duplexing auto document feeder (DADF) 30, and an image reader 32. The image forming apparatus 20 further includes a control device 10.

### (Body)

The body 22 is a housing that houses an image former 22A, a cartridge 22B, and the like. The body 22 also houses the control device 10.

The image former 22A forms a document image generated by the image reader 32 described later on a recording medium such as paper by using, for example, an electrophotographic system or an inkjet recording system.

In a case where the image former 22A uses the electrophotographic system, the cartridge 22B is a toner cartridge that contains toner as an example of a coloring material. In a case where the image former 22A uses the inkjet recording system, the cartridge 22B is an ink cartridge that contains ink as an example of the coloring material. The cartridge 22B includes cartridges of, for example, yellow, magenta, cyan, and black coloring materials.

### (Inputter)

The inputter 24 is an interface that allows a user to input a job to be performed by the image forming apparatus 20. The inputter 24 includes a display 24A and an operator 24B.

The display 24A is, for example, a combination of a touch panel and a liquid crystal display or an organic EL display. The display 24A displays, for example, an image in response to a user's touch operation or a process performed by the image forming apparatus 20. The operator 24B includes operation keys, operation buttons, and a power button of the image forming apparatus 20.

The user may designate a job for the image forming apparatus 20 and instruct the image forming apparatus 20 to start the job by, for example, touching the display 24A or pressing an operation button of the operator 24B. In the following description, the user's input operation is performed via the display 24A, but may be performed via the operator 24B.

### (Duplexing Auto Document Feeder)

The duplexing auto document feeder 30 is mounted at the upper end of the body 22, and includes a paper stage where one or more documents to be read by the image reader 32 may be set. The duplexing auto document feeder 30 also serves as an openable and closable platen cover that covers the image reader (platen glass) 32.

### (Image Reader)

The image reader 32 includes a charge-coupled device (CCD) image sensor that reads a document set on a platen at the upper end surface of the body 22 and generates a document image. One document to be read by the image reader 32 may be set on the platen. The image reader 32 may read documents set on the paper stage of the duplexing auto document feeder 30.

### <Control Device>

The control device 10 receives a job set by a user's input operation on the image forming apparatus 20, and controls the image forming apparatus 20 to perform the designated job. The control device 10 may perform a printed product inspection process as its job. The inspection process includes a uniform resource locator (URL) check process and a comparison process.

### (URL Check Process)

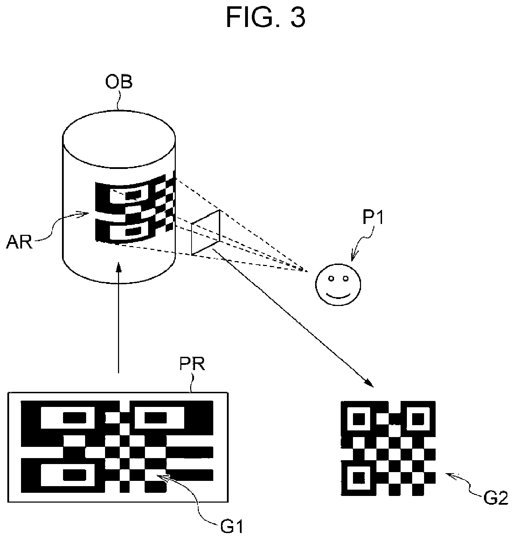

The "URL check process" is a process for checking the validity of URL link information on a printed product PR illustrated in Fig. 3. An image G1 including a QR code (registered trademark) that is an example of the URL link information is printed on the printed product PR.

For example, the printed product PR is attached to a three-dimensional attachment target OB. The surface shape of the attachment target OB is not particularly limited. In this exemplary embodiment, the attachment target OB is a columnar object having a curved surface in an area AR where the printed product PR is attached.

When the image G1 on the printed product PR attached to the area AR is viewed from a viewpoint P1, a projected image G2 that is the image G1 on the curved surface projected in a plane is viewed from the viewpoint P1. When the user uses a QR code reader at the viewpoint P1 to read the image G1, the QR code reader reads the projected image G2 and acquires the URL link information.

As described later, the control device 10 generates check data by using the printed product PR before it is attached to the attachment target OB. The validity of the URL link information acquired from the projected image G2 by the QR code reader may be checked based on the generated check data.

### (Comparison Process)

The "comparison process" is a process for checking whether the printed product is output in an ideal form. As described later, the control device 10 may determine whether the check data has an error by comparing the check data with correct data having less streaks, spots, fading, or distortion.

### (Electrical Configuration of Control Device)

As illustrated in Fig. 1, the control device 10 includes a central processing unit (CPU: processor) 11, a memory 12 serving as a temporary storage area, a non-volatile storage 13, a medium reading and writing device (R/W) 16, a communication interface (I/F) 18, and an external I/F 19. The CPU 11, the memory 12, the storage 13, the medium reading and writing device 16, the communication I/F 18, and the external I/F 19 are connected to each other via a bus B1. The medium reading and writing device 16 reads information written in a recording medium 17, and writes information into the recording medium 17. The communication I/F 18 communicatively connects the image forming apparatus 20 to, for example, a server external to the image forming apparatus 20 and various terminals of users (personal computer, smartphone, tablet, etc.). The communication I/F 18 uses communication standards such as Wi-Fi (registered trademark), Bluetooth (registered trademark), and a local area network (LAN).

### (Storage)

Examples of the storage 13 include a hard disk drive (HDD), a solid state drive (SSD), and a flash memory. The storage 13 serving as a storage medium stores an information processing program 13A. The information processing program 13A is stored in the storage 13 in such a manner that the recording medium 17 in which the information processing program 13A is written is set on the medium reading and writing device 16 and the medium reading and writing device 16 reads the information processing program 13A from the recording medium 17. The CPU 11 reads the information processing program 13A from the storage 13, loads the information processing program 13A in the memory 12, and sequentially performs processes in the information processing program 13A. The storage 13 stores an object database 13B and a check result database 13C described later.

### (Functional Configuration of Control Device)

Next, the functional configuration of the control device 10 according to this exemplary embodiment is described with reference to Fig. 2. As illustrated in Fig. 2, the control device 10 includes an information acquirer 11A, a check data generator 11B, a checker 11C, a correct data generator 11D, a comparator 11E, an outputter 11F, and a controller 11G. The CPU 11 of the control device 10 executes the information processing program 13A to function as the information acquirer 11A, the check data generator 11B, the checker 11C, the correct data generator 11D, the comparator 11E, the outputter 11F, and the controller 11G.

### (Controller)

The controller 11G controls various functions of, for example, the image former 22A, the display 24A, the duplexing auto document feeder 30, and the image reader 32 of the image forming apparatus 20.

### (Information Acquirer)

The information acquirer 11A receives a job set by a user's input operation via the display 24A. Specifically, the information acquirer 11A acquires an instruction to start a print job for the image G1.

The print job for the image G1 may be received by an apparatus other than the image forming apparatus 20, as typified by a terminal such as a personal computer of the user. For the instruction to start the print job, the user may select options for the URL check process.

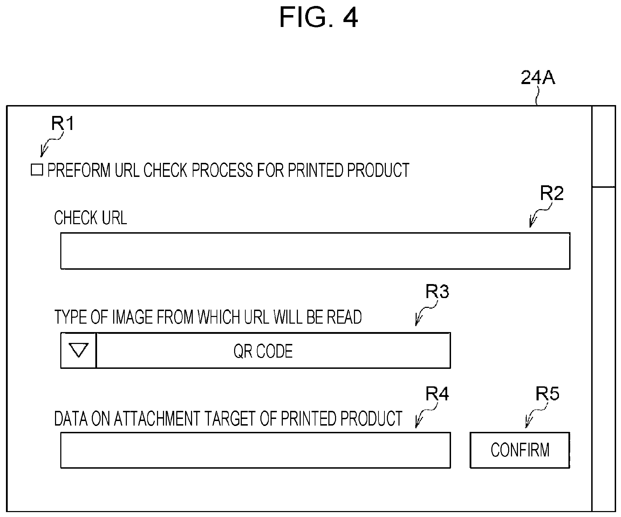

Fig. 4 illustrates an example of an option selection screen for the URL check process that is displayed on the display 24A or a screen of the terminal of the user. In this example, the display 24A displays a checkbox R1, an input field R2, a drop-down menu R3, a display field R4, and a confirmation button R5.

With the checkbox R1, the user who is going to make the instruction to start the print job may select options for the URL check process. In the input field R2, the user inputs URL link information to be checked. The "URL link information to be checked" is a URL to be accessed when the QR code reader reads the image G1.

The drop-down menu R3 shows a list for the user to select the type of the image including the URL link information (QR code, barcode, or other two-dimensional codes or other images). The display field R4 displays a reference link of data on the attachment target OB of the printed product PR. The confirmation button R5 is used by the user to confirm the attachment target OB.

Information input via the checkbox R1, the input field R2, the drop-down menu R3, the display field R4, and the confirmation button R5 may hereinafter be referred to as "input information".

The "data on attachment target OB" includes "shape information" indicating the three-dimensional shape of the attachment target OB illustrated in Fig. 3, "area information" indicating the position and size of the area AR on the attachment target OB where the printed product PR is attached, and "viewpoint information" indicating the position of the viewpoint where the image G1 attached to the area AR is viewed in a virtual space. In the exemplary embodiment of the present disclosure, "3D data" includes the "shape information" and the "area information" of the attachment target OB. The number of pieces of "viewpoint information" may be one or plural.

In a case where the image G1 shows the QR code alone, the "viewpoint information" may include, as a "predetermined viewpoint" of the exemplary embodiment of the present disclosure, a viewpoint in a direction normal to a plane at the center of the image on the attachment target OB. In a case where the QR code is included as a part of the image G1, the "viewpoint information" may include a viewpoint in a direction normal to a plane at the center of the QR code on the attachment target OB.

The shape information, the area information, and the viewpoint information are stored in the object database 13B in the storage 13. The information acquirer 11A acquires the input information, the shape information, the area information, and the viewpoint information. Description is made below about a print job when the user selects options for the URL check process.

### (Check Data Generator)

In response to the instruction to start the print job, the check data generator 11B scans the printed product PR of the image G1 and generates "check data" that is a raster image. The printed product PR is scanned by the image reader 32 in response to an instruction from the check data generator 11B.

### (Checker)

The checker 11C checks the validity of the URL link information on the printed product PR. Specifically, the checker 11C acquires the check data generated by the check data generator 11B. The checker 11C reads 3D data of the attachment target OB of the printed product PR from the object database 13B. The checker 11C attaches the check data to the read 3D data. At this time, the check data is attached to the area AR on the attachment target OB.

The checker 11C checks the validity of the URL link information by viewing the check data attached to the 3D data from the predetermined viewpoint in the virtual space. The validity is checked by virtually reading the QR code in the check data and determining whether the designated URL is accessible.

If the 3D data of the attachment target OB is present, the checker 11C attaches the check data to the 3D data. The phrase "if the 3D data is present" means a case where the reference link of the data on the attachment target OB selected by the user is valid. That is, this means a case where the checker 11C has successfully read the 3D data of the attachment target OB from the selected reference link.

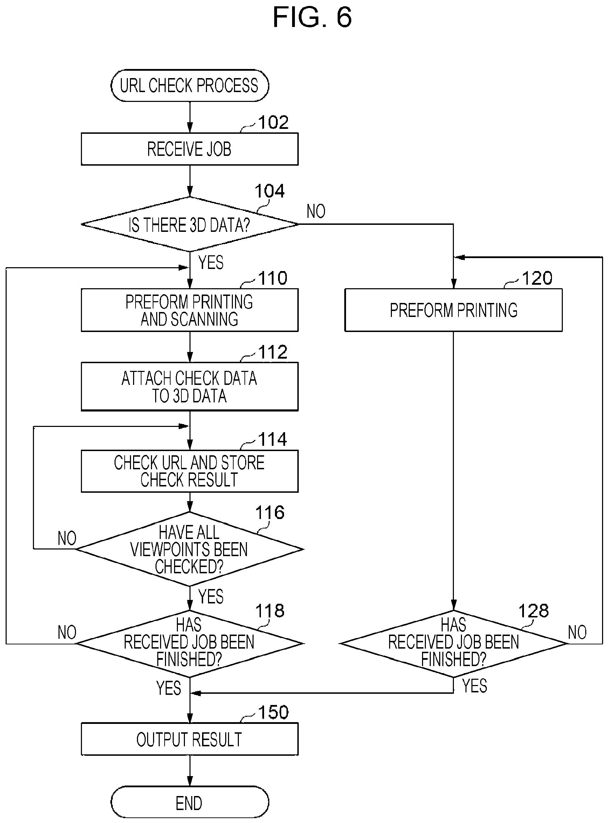

If the 3D data of the attachment target OB is not present, the checker 11C need not perform the URL check process as in the description of the URL check process (see Fig. 6) given later.

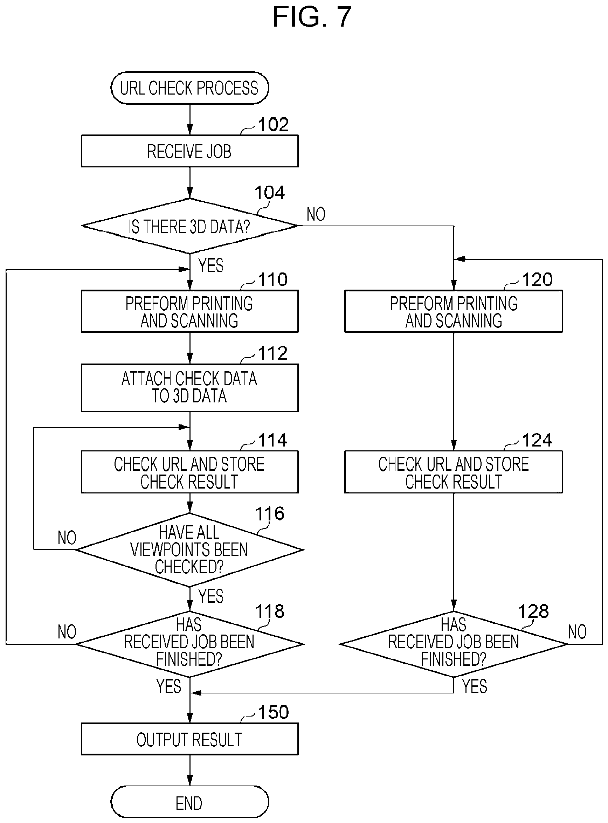

Alternatively, if the 3D data of the attachment target OB is not present, the checker 11C may check the validity of the URL link information in 2D check data as in the description of a modification of the URL check process (see Fig. 7) given later. The "2D check data" is a two-dimensional raster image generated by scanning the printed product PR of the image G1. At this time, the checker 11C checks the validity of the URL link information by viewing the 2D check data from the front in the virtual space.

The checker 11C may check the validity of the URL link information by viewing the check data from a plurality of viewpoints. The checker 11C checks the validity of the URL link information from the plurality of viewpoints if the object database 13B stores a plurality of pieces of viewpoint information for viewing the image G1.

In this case, the checker 11C checks the validity of the URL link information by viewing the check data from the viewpoint P1 illustrated in Fig. 3 and a viewpoint different from the viewpoint P 1.

The result of checking on the validity of the URL link information by the checker 11C is stored in the check result database 13C.

### (Correct Data Generator)

The correct data generator 11D generates "correct data" by rasterizing the image G1 including the URL link information. Specifically, the correct data generator 11D generates the correct data that is a raster image by rasterizing data on the image G1 before printing (e.g., vector data).

### (Comparator)

The comparator 11E compares the correct data and the check data. Since the correct data is generated by rasterizing the data before printing (e.g., vector data), the correct data does not undergo the printing and scanning. Therefore, the accuracy is higher than that of the check data obtained by scanning and rasterizing the printed product PR of the image G1.

The comparator 11E compares the correct data and the check data, and extracts information indicating whether the check data has an error. For example, the comparator 11E determines that the check data has an error when the check data includes a streak, a spot, fading, or distortion that is not included in the correct data. For example, the comparator 11E determines that the check data has an error also when the check data does not include a line or point included in the correct data.

The result of comparison between the correct data and the check data by the comparator 11E is stored in the check result database 13C.

### (Outputter)

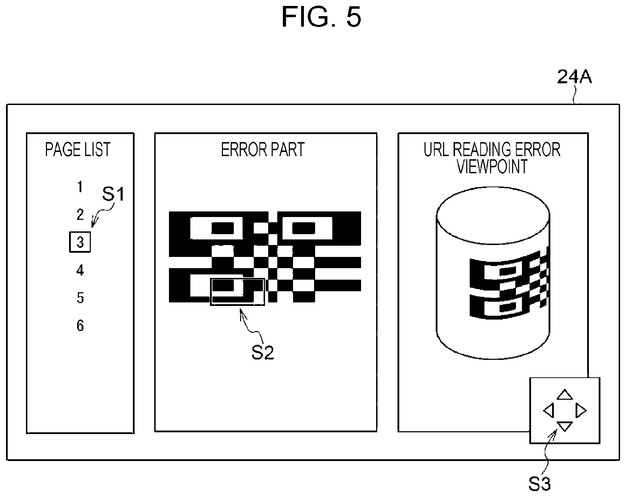

As illustrated in Fig. 5, the outputter 11F may output the result of comparison between the correct data and the check data by the comparator 11E to the display 24A. The outputter 11F may output the result of checking on the validity of the URL link information by the checker 11C to the display 24A of the image forming apparatus 20.

The display 24A may display the comparison result and the check result by any method. In the display example of Fig. 5, the third printed product PR out of six printed products PR has an error in its check data compared with the correct data, and has a viewpoint where URL link information is not valid.

The six printed products PR are represented by numbers "1" to "6" in a "page list" field on the display 24A. A box S1 encloses the number "3" of the third printed product PR to indicate that the third printed product PR has at least one of an error in its check data compared with the correct data or a viewpoint where the URL link information is not valid.

In an "error part" field on the display 24A, an error part in the check data compared with the correct data is shown by being enclosed by a box S2. The "error part" field is not displayed if the check data has no error part.

A "URL reading error viewpoint" field on the display 24A shows the attachment target OB that is viewed from the viewpoint where the URL link information is not valid. If there is a plurality of viewpoints where the URL link information is not valid, a cursor S3 is displayed to move the viewpoint. The "URL reading error viewpoint" field is not displayed if there is no viewpoint where the URL link information is not valid.

The outputter 11F may cause the screen of the terminal of the user to output at least one of the result of comparison between the correct data and the check data by the comparator 11E or the result of checking on the validity of the URL link information by the checker 11C.

### <Processing Flows>

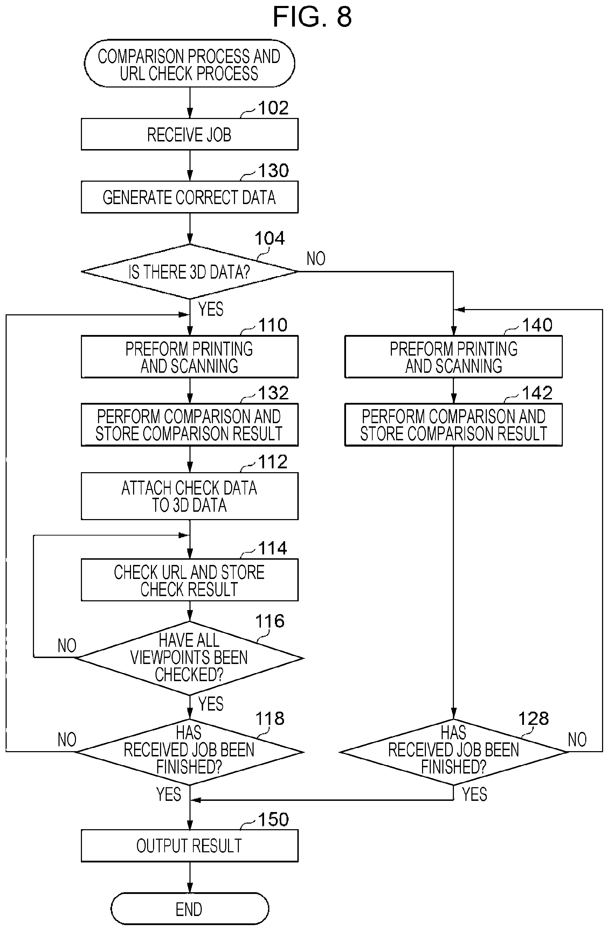

Processing flows of this exemplary embodiment are described with reference to Figs. 6 to 8. First, an example of the URL check process is described with reference to Fig. 6. Next, a modification of the URL check process is described with reference to Fig. 7. Then, a process for comparing check data and correct data by the comparator 11E in addition to the URL check process is described with reference to Fig. 8.

### (URL Check Process)

In response to reception of a print job for an image G1 from the user, the CPU 11 of the control device 10 executes the information processing program 13A. Therefore, the URL check process illustrated in Fig. 6 is performed (Step 102).

In response to the start of the URL check process, the CPU 11 determines, in Step 104, whether 3D data of an attachment target OB is present. If the determination result is "YES" in Step 104, the process proceeds to Step 110.

In Step 110, the CPU 11 prints the image G1, and scans an output printed product PR to generate check data. After Step 110, the process proceeds to Step 112.

If the determination result is "NO" in Step 104, the process proceeds to Step 120. In Step 120, the CPU 11 prints the image G1, but does not scan the printed product PR. After Step 120, the process proceeds to Step 128.

In Step 128, the CPU 11 determines whether all the images in the received print job have been printed. If the determination result is "YES" in Step 128, the URL check process is terminated. If the determination result is "NO" in Step 128, the process returns to Step 120 to print a different image.

In Step 112, the CPU 11 attaches the generated check data to the 3D data of the attachment target OB. After Step 112, the process proceeds to Step 114.

In Step 114, the CPU checks the validity of URL link information by viewing the check data attached to the 3D data of the attachment target OB from the predetermined viewpoint in the virtual space, and stores a check result in the check result database 13C. After Step 114, the process proceeds to Step 116.

In Step 116, the CPU 11 determines whether the validity of the URL link information has been checked from all the viewpoints stored in the object database as viewpoint information. If the determination result is "YES" in Step 116, the process proceeds to Step 118.

If the determination result is "NO" in Step 116, the process returns to Step 114 to check the validity of the URL link information from a different viewpoint.

In Step 118, the CPU 11 determines whether all the images in the received print job have been printed and the URLs have been checked. If the determination result is "YES" in Step 118, the process proceeds to Step 150.

In Step 150, the CPU 11 displays the URL check result on the display 24A, and terminates the URL check process.

If the determination result is "NO" in Step 118, the process returns to Step 110 to print a different image and check the URL.

### (Modification of URL Check Process)

If the determination result is "NO" in Step 104 in the URL check process illustrated in Fig. 6, the printed product PR is not scanned, and the URL is not checked. If the determination result is "NO" in Step 104 in the modification of the URL check process illustrated in Fig. 7, the printed product PR is scanned, and the URL is checked.

In the modification of the URL check process, processes other than the process described below are similar to those in the URL check process illustrated in Fig. 6, and description thereof is omitted.

In Step 120 of the modification of the URL check process, the CPU 11 prints the image G1, and scans the output printed product PR to generate check data. After Step 120, the process proceeds to Step 124.

In Step 124, the CPU 11 checks the validity of the URL link information by viewing the 2D check data from the front in the virtual space, and stores a check result in the check result database 13C. After Step 124, the process proceeds to Step 128.

In Step 128, the CPU 11 determines whether all the images in the received print job have been printed and the URLs have been checked. If the determination result is "YES" in Step 128, the process proceeds to Step 150.

### (Comparison Process and URL Check Process)

In the URL check processes illustrated in Figs. 6 and 7, description has been made about the processing flows in a case where the process for comparing the correct data and the check data is not performed. Referring to Fig. 8, description is made below about a processing flow in a case where the process for comparing the correct data and the check data is performed in addition to the URL check process.

In the case where the comparison process is performed, processes other than the process described below are similar to those in the URL check process illustrated in Fig. 6, and description thereof is omitted.

In response to the start of the comparison process and the URL check process, the CPU 11 generates correct data by rasterizing the image G1 before printing in Step 130. After Step 130, the process proceeds to Step 104.

In this processing flow, the process proceeds to Step 132 after Step 110. In Step 132, the correct data and the check data are compared, and a comparison result is stored in the check result database 13C. After Step 132, the process proceeds to Step 112.

In this processing flow, the CPU 11 determines, in Step 118, whether all the images in the received print job have been printed and the comparison process and the URL check process have been finished. If the determination result is "YES" in Step 118, the process proceeds to Step 150 to display the comparison result and the URL check result on the display 24A, and terminate the comparison process and the URL check process.

If the determination result is "NO" in Step 104 of this processing flow, the process proceeds to Step 140. In Step 140, the CPU 11 prints the image G1, and scans the output printed product PR to generate check data. After Step 140, the process proceeds to Step 142.

In Step 142, the CPU 11 compares the correct data and the check data, and stores a comparison result in the check result database 13C. After Step 142, the process proceeds to Step 128.

In Step 128, the CPU 11 determines whether all the images in the received print job have been printed and the comparison process has been finished. If the determination result is "YES" in Step 128, the process proceeds to Step 150.

In Step 150, the CPU displays the comparison result on the display 24A, and terminates the comparison process and the URL check process.

### <Operations and Effects>

A printed product of an image including URL link information may be attached to an attachment target and the URL link information may be read from the attached image by a reader. If the image is attached to the attachment target in an area having a curved surface or the reader is located at a position where the image is not easily recognized, there is a possibility that the URL link information is not properly read.

If the printed product of the image is attached to a real attachment target and the validity of the URL link is checked, however, it takes a great deal of time and effort to produce the attachment target and the printed product to be attached to the attachment target.

In the information processing system 80 according to this exemplary embodiment, the check data is attached to the 3D data of the attachment target OB of the printed product PR. Then, the validity of the URL link information is checked by viewing the check data attached to the 3D data from the predetermined viewpoint in the virtual space.

Therefore, the validity of the URL link information in the image G1 may be checked with the printed product PR of the image G1 unattached to the attachment target OB.

The check data is generated as the raster image by scanning the printed product PR of the image G1. Therefore, the accuracy of the image in the check data is close to that of the image G1 on the printed product PR actually attached to the attachment target OB compared with an image generated without printing the image G1 (e.g., vector image). Thus, the check accuracy is higher than in a case where the image generated without printing the image G1 is attached to the 3D data and checked.

In the information processing system 80 according to this exemplary embodiment, if the 3D data of the attachment target OB of the printed product PR is not present, the process of performing the print job alone without scanning the printed product PR of the image G1 may be performed as described in the URL check process of Fig. 6. Thus, at least the print job may be performed even though the URL check process is not performable.

In the information processing system 80 according to this exemplary embodiment, if the 3D data of the attachment target OB of the printed product PR is not present, the printed product PR of the image G1 may be scanned and the validity of the URL link information in the 2D check data may be checked as described in the modification of the URL check process of Fig. 7.

Therefore, at least the validity of the URL link information in the image G1 on the printed product PR before it is attached to the attachment target OB may be checked. If the printed product PR is attached to the attachment target OB in a planar area, the validity of the URL link information in the image G1 on the printed product PR may be checked.

If the 3D data of the attachment target OB of the printed product PR is not present, the CPU 11 may determine as appropriate which of the URL check process of Fig. 6 and the modification of the URL check process of Fig. 7 to perform, and which to perform may be preset by the user's input operation.

In the information processing system 80 according to this exemplary embodiment, the validity of the URL link information may be checked by viewing the check data from a plurality of viewpoints including the predetermined viewpoint in the virtual space. Thus, it is possible to check whether the URL link information may be acquired in many directions when the printed product PR is attached to the attachment target OB.

In the information processing system 80 according to this exemplary embodiment, the correct data is generated by rasterizing the image G1, and the correct data and the check data are compared. Thus, an error may be detected on the printed product PR attached to the attachment target OB. If the URL link information is not valid, the error may be presumed as its cause.

In the information processing system 80 according to this exemplary embodiment, the result of comparison between the correct data and the check data and the result of checking on the validity of the URL link information may be output to the display 24A of the image forming apparatus 20. Thus, whether there is a difference between the check data and the correct data and the validity of the URL link may be viewed on the display 24A of the image forming apparatus 20.

### <Other Exemplary Embodiments>

In the above exemplary embodiment, the validity of the URL link information is checked by viewing the check data from a plurality of viewpoints including the predetermined viewpoint in the virtual space. However, the exemplary embodiment of the present disclosure is not limited to this case.

The validity of the URL link information may be checked from at least one viewpoint. Even if the validity of the URL link information is checked from one viewpoint, the validity of the URL link information in the image may be checked with the printed product PR of the image G1 unattached to the attachment target OB.

In the above exemplary embodiment, the result of comparison between the correct data and the check data and the result of checking on the validity of the URL link information are output to the display 24A of the image forming apparatus 20 before the termination of the processing flow. However, the exemplary embodiment of the present disclosure is not limited to this case.

For example, the display 24A need not display those pieces of information before the termination of the processing flow. In this case, those pieces of information may be displayed by the user's input operation via the display 24A.

For example, the display 24A may display either the result of comparison between the correct data and the check data or the result of checking on the validity of the URL link information, or may display neither of them. The information that is not displayed on the display 24A may be displayed on, for example, the terminal of the user.

In the above exemplary embodiment, if the determination result is "NO" in Step 104 in the comparison process and the URL check process illustrated in Fig. 8, the printed product PR is scanned but the URL is not checked. However, the exemplary embodiment of the present disclosure is not limited to this case.

That is, the validity of the URL link information in the 2D check data may be checked similarly to Step 124 illustrated in Fig. 7 by using the check data generated by scanning the printed product PR, and the check result may be stored in the check result database 13C.

In the above exemplary embodiment, the information processing system 80 may generate the correct data by rasterizing the image G1 and compare the correct data and the check data. However, the exemplary embodiment of the present disclosure is not limited to this case.

For example, the information processing system 80 need not have the function of comparing the correct data and the check data. In this case, the correct data generator 11D and the comparator 11E may be omitted from the control device 10. Even if the control device 10 includes the correct data generator 11D and the comparator 11E, whether to perform the comparison process for comparing the correct data and the check data may be determined as appropriate, and may be preset by the user's input operation.

In the above exemplary embodiment, the following various processors may be used as the hardware structure of a processing unit that performs the processes of, for example, the information acquirer 11A, the check data generator 11B, the checker 11C, the correct data generator 11D, the comparator 11E, the outputter 11F, and the controller 11G. Examples of the various processors include, as described above, a CPU that is a general processor functioning as the processing unit by executing software (programs), a field-programmable gate array (FPGA) and other programmable logic devices (PLDs) that are processors having circuit structures reconfigurable after the manufacture, and an application specific integrated circuit (ASIC) and other dedicated electric circuits that are processors having dedicated circuit structures designed to perform specific processes.

The processing unit may be configured by one of the various processors or by a combination of two or more processors of the same type or different types (e.g., a combination of a plurality of FPGAs or a combination of a CPU and an FPGA). The processing unit may be configured by one processor.

As a first example of the processing unit configured by one processor, one or more CPUs and software are combined into one processor and this processor functions as the processing unit, as typified by a computer such as a client or a server. As a second example, a processor that implements functions of the overall system including the processing unit by one integrated circuit (IC) chip is used, as typified by a system on chip (SoC). In this way, the processing unit is configured by one or more of the various processors as a hardware structure.

More specifically, circuitry obtained by combining circuit elements such as semiconductor elements may be used as the hardware structures of the various processors. In this way, the exemplary embodiment of the present disclosure may be implemented by various forms.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### <Appendix>

(((1))) An information processing system comprising:
   at least one processor configured to:
   acquire check data generated by scanning a printed product of an image including URL link information;
   attach the check data to 3D data of an attachment target of the printed product; and
   check validity of the URL link information by viewing the check data attached to the 3D data from a predetermined viewpoint in a virtual space.
(((2))) The information processing system according to (((1))), wherein the processor is configured to:
   acquire an instruction to start printing of the image by an image forming apparatus; and
   if the 3D data is present, attach the check data generated by scanning the printed product of the image to the 3D data.
(((3))) The information processing system according to (((1))) or (((2))), wherein the processor is configured to:
   if the 3D data is not present,
   generate 2D check data by scanning the printed product of the image; and
   check the validity of the URL link information in the 2D check data.
(((4))) The information processing system according to any one of (((1))) to (((3))), wherein the processor is configured to further check the validity of the URL link information by viewing the check data from a viewpoint different from the predetermined viewpoint.
(((5))) The information processing system according to any one of (((1))) to (((4))), wherein the processor is configured to output a result of checking on the validity of the URL link information to a display screen of an image forming apparatus.
(((6))) The information processing system according to any one of (((1))) to (((5))), wherein the processor is configured to:
   generate correct data by rasterizing the image; and
   compare the correct data and the check data.
(((7))) The information processing system according to (((6))), wherein the processor is configured to output a result of comparison between the correct data and the check data and a result of checking on the validity of the URL link information to a display screen of an image forming apparatus.
(((8))) A program causing a computer to execute a process for processing information, the process comprising:
   generating check data by scanning a printed product of an image including URL link information;
   attaching the check data to 3D data of an attachment target of the printed product; and
   checking validity of the URL link information by viewing the check data attached to the 3D data from a predetermined viewpoint in a virtual space.

With the information processing system according to (((1))) and the program for processing information according to (((8))), the validity of the URL link information in the image may be checked with the printed product of the image unattached to the attachment target.

With the information processing system according to (((2))), the validity of the URL link information on the printed product of the image printed in response to the printing instruction may be checked.

With the information processing system according to (((3))), the validity of the URL link information in the image on the printed product before it is attached to the attachment target may be checked.

With the information processing system according to (((4))), the validity of the URL link information may be checked by viewing the check data from the plurality of viewpoints.

With the information processing system according to (((5))), the validity of the URL link information may be viewed on the display screen of the image forming apparatus.

With the information processing system according to (((6))), a difference from the correct data obtained by rasterizing the image may be extracted in addition to the checking on the validity of the URL link information in the check data obtained by scanning the printed product of the image.

With the information processing system according to (((7))), whether there is a difference between the check data and the correct data and the validity of the URL link may be viewed on the display screen of the image forming apparatus.

## Claims

1. An information processing system comprising:
at least one processor configured to:
acquire check data generated by scanning a printed product of an image including URL link information;
attach the check data to 3D data of an attachment target of the printed product; and
check validity of the URL link information by viewing the check data attached to the 3D data from a predetermined viewpoint in a virtual space.

2. The information processing system according to claim 1, wherein the processor is configured to:
acquire an instruction to start printing of the image by an image forming apparatus; and
if the 3D data is present, attach the check data generated by scanning the printed product of the image to the 3D data.

3. The information processing system according to claim 1 or 2, wherein the processor is configured to:
if the 3D data is not present,
generate 2D check data by scanning the printed product of the image; and
check the validity of the URL link information in the 2D check data.

4. The information processing system according to any one of claims 1 to 3, wherein the processor is configured to further check the validity of the URL link information by viewing the check data from a viewpoint different from the predetermined viewpoint.

5. The information processing system according to any one of claims 1 to 4, wherein the processor is configured to output a result of checking on the validity of the URL link information to a display screen of an image forming apparatus.

6. The information processing system according to any one of claims 1 to 5, wherein the processor is configured to:
generate correct data by rasterizing the image; and
compare the correct data and the check data.

7. The information processing system according to claim 6, wherein the processor is configured to output a result of comparison between the correct data and the check data and a result of checking on the validity of the URL link information to a display screen of an image forming apparatus.

8. A program causing a computer to execute a process for processing information, the process comprising:
generating check data by scanning a printed product of an image including URL link information;
attaching the check data to 3D data of an attachment target of the printed product; and
checking validity of the URL link information by viewing the check data attached to the 3D data from a predetermined viewpoint in a virtual space.

9. An information processing method comprising:
generating check data by scanning a printed product of an image including URL link information;
attaching the check data to 3D data of an attachment target of the printed product; and
checking validity of the URL link information by viewing the check data attached to the 3D data from a predetermined viewpoint in a virtual space.
